# FASCICULE DE BREVET EUROPEEN

(11) **EP 1 692 385 B1**
(45) Date de publication et mention de la délivrance du brevet: **02.01.2008**
(21) Numéro de dépôt: 04805867.1
(22) Date de dépôt: 30.11.2004
(51) Int. Cl.: F02F 7/00

(54) **DISPOSITIF DE SUPPORT MOTEUR**
MOTORLAGERVORRICHTUNG
ENGINE BEARING DEVICE

(30) Priorité: 02.12.2003 FR 0314126
(43) Date de publication de la demande: 23.08.2006
(73) Titulaire: Renault SAS, 92100 Boulogne Billancourt (FR)
(72) Inventeur: LAUNAY, Jean Michel, F-92500 Rueil Malmaison (FR); REVERSEAU, Denis, F-92100 Boulogne Billancourt (FR); SOUA, Ali, F-92100 Boulogne Billancourt (FR)
(86) Numéro de dépôt international: PCT/FR2004/050628
(87) Numéro de publication internationale: WO 2005/057000

(56) Documents cités:
- EP-A- 0 989 294
- US-A- 4 793 300
- US-A- 4 950 210
- US-A- 5 245 961
- US-A- 5 743 229
- US-A1- 2003 084 865

## Description

La présente invention concerne un dispositif de support de moteur à combustion interne en V de véhicule automobile, et en particulier un dispositif de support de moteur à combustion interne en V situé du côté du carter de distribution, selon le préambule de la revendication 1, voir US-A-4 950 210.

US-A-5 245 961 divulgue un carter étant pourvu d'un élément intermédiare de support intégré au carter. US 2003/0084865 A divulgue un carter avec des nervures.

Il est connu d'utiliser des dispositifs de support de moteur à combustion interne en V installés sur le côté distribution du moteur. Ces dispositifs de support moteur sont fixés sur la caisse d'un véhicule automobile par l'intermédiaire d'un élément amortissant. Ces dispositifs sont généralement constitués d'un assemblage de pièces fixé sur le moteur en V. Ces dispositifs possèdent une fréquence propre qui se trouve dans la gamme de fréquences émises par le moteur. Ces dispositifs peuvent donc entrer en résonance. Le phénomène de résonance amplifie les niveaux vibratoires de l'assemblage.

L'invention vise à pallier les inconvénients de l'état de la technique.

Dans ce but, elle propose un dispositif de support d'un moteur à combustion interne en V fixé sur la caisse d'un véhicule automobile par l'intermédiaire d'un élément amortissant, le dispositif comportant une coiffe de fixation sur la caisse et un élément intermédiaire de support, la coiffe étant assemblée sur l'élément intermédiaire de support lui-même monté sur le carter cylindre et les culasses du moteur, la partie inférieure de l'élément intermédiaire de support ayant une forme prévue pour épouser celle d'une pompe à eau fixée sur un orifice d'un carter de distribution, caractérisé en ce que le dispositif comporte le carter de distribution du moteur, l'élément intermédiaire de support étant intégré au carter de distribution, et en ce que le dispositif comporte des trous de fixation communs à l'élément intermédiaire de support et au carter de distribution, les trous étant situés autour de la partie intérieure du V sur la périphérie du carter de distribution.
- Le dispositif de support peut comporter des nervures de rigidification partant de l'élément intermédiaire et qui s'étendent le long de la face extérieure du carter de distribution.
- Les nervures peuvent s'étendre le long du carter de distribution entre l'élément intermédiaire et la périphérie du carter de distribution.
- Les nervures peuvent s'étendre le long du carter de distribution entre l'élément intermédiaire et des trous de fixation disposés sur la périphérie du carter de distribution.
- Les nervures peuvent s'étendre le long du carter de distribution à partir de trous de fixation disposés sur la périphérie de l'élément intermédiaire de support.

La présente invention et ses avantages seront mieux compris à la lecture de la description détaillée d'un mode de réalisation pris à titre d'exemple et nullement limitatif, et illustré par les dessins annexés sur lesquels :
- La figure 1 est un schéma d'un dispositif connu.
- La figure 2 est un schéma de l'invention.
- La figure 3 est un schéma de l'invention sans la coiffe moteur.

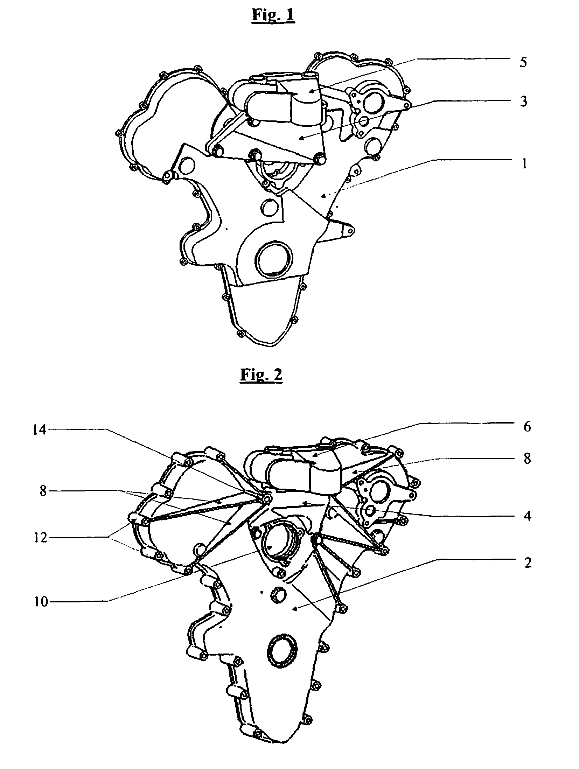

Sur la figure 1, le dispositif connu comporte un élément intermédiaire de support 3. Cet élément 3 est fixé au moyen de vis sur le carter cylindre et sur les culasses, non représentés. Ce type de dispositif comporte également une coiffe moteur 5. La coiffe moteur 5 est fixée d'une part sur l'élément intermédiaire 3 au moyen de vis, et d'autre part sur la caisse, non représentée, d'un véhicule par l'intermédiaire de l'élément amortissant lui aussi non représenté. L'élément amortissant réalise la liaison et filtre les vibrations provenant du groupe moto-propulseur.

Le moteur comporte un carter de distribution 1. Le carter de distribution 1 sert à protéger le système d'entraînement de la distribution et à étanchéifier la partie comportant ce système d'entraînement. Le carter de distribution 1 est fixé sur le carter cylindres et sur les deux culasses au moyen de vis. Le carter de distribution 1 est pris en sandwich entre l'ensemble constitué du carter cylindre et des culasses, et l'élément intermédiaire de support 3. Il définit des orifices de passages des fixations de l'élément intermédiaire de support (4) sur le carter cylindre et les culasses.

La rigidité de l'assemblage (coiffe moteur 5 et élément intermédiaire de support 3) confère une première fréquence propre qui peut difficilement dépasser 450 Hz. Or la gamme de fréquences émises par le moteur, appelée présence moteur, est comprise entre 350 Hz et 700 Hz, ce qui signifie qu'elle couvre la première fréquence propre du montage. Le montage peut donc entrer en résonance.

L'élément amortissant qui relie la coiffe moteur 5 à la caisse du véhicule ne filtre les vibrations de manière efficace qu'à partir de 700 Hz, ce qui a pour conséquence que les vibrations du montage en phase de résonance sont transmises à la caisse du véhicule.

Le dispositif de support moteur proposé par l'invention se trouve sur le côté distribution d'un moteur à combustion interne en V non représenté. Le dispositif de support moteur est prévu pour être fixé à la caisse non représentée d'un véhicule automobile, par l'intermédiaire d'un élément amortissant non représenté.

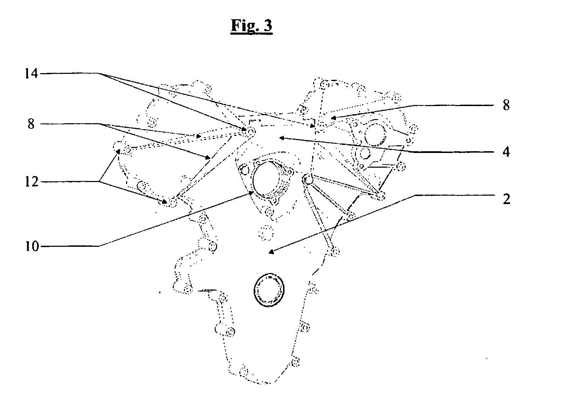

En référence à la figure 3, l'invention comporte un carter de distribution 2. Le carter de distribution 2 est constitué d'une pièce moulée se fixant sur un carter cylindre et sur deux culasses, tous les trois étant non représentés, d'un moteur en V, au moyen de vis. Le carter de distribution 2 comporte de nombreux trous de fixation 12 sur sa périphérie qui sont destinés à recevoir ces vis. La forme du carter de distribution 2 correspond au profil du carter cylindre et des culasses.

Le carter de distribution 2 définit un orifice 10 de fixation d'une pompe à eau non représentée. L'orifice 10 se situe dans l'axe du centre du V.

L'invention comporte aussi un élément intermédiaire de support 4. L'élément intermédiaire de support 4 fait partie du carter de distribution 2, c'est-à-dire qu'il est réalisé par moulage en même temps que le carter de distribution 2. La partie inférieure de l'élément intermédiaire de support 4 a une forme prévue pour épouser celle de la pompe à eau qui se fixe sur l'orifice 10 du carter de distribution 2. Des trous de fixation 14 du carter de distribution se situent aussi en périphérie de l'élément intermédiaire de support. Ce sont notamment des trous de fixation 14 situés autour de la partie intérieure du V sur la périphérie du carter de distribution 2. Il s'agit de trous de fixation 14 communs à l'élément intermédiaire de support 4 et au carter de distribution 2. Le dispositif présente donc des trous de fixation 14 de la coiffe 6 qui sont disposés sur la périphérie du carter de distribution 2.

L'invention comporte aussi des nervures 8 de rigidification, les nervures 8 partent de la partie de l'élément intermédiaire de support 4 qui dépasse du carter de distribution 2, et s'étendent le long de la face extérieure du carter de distribution 2, jusqu'à la périphérie du carter de distribution 2. Les nervures 8 commencent à proximité de trous de fixations 14 de l'élément intermédiaire de support 4 et du carter de distribution 2, et s'étendent jusqu'à des trous de fixation 12 situés sur la périphérie du carter de distribution 2.

L'emploi de ces nervures 8 permet de garantir une surface d'appui plus importante de l'élément intermédiaire de support 4 sur le carter de distribution 2.

En référence aussi à la figure 2, l'invention comporte une coiffe de fixation 6. La coiffe de fixation 6 est une pièce moulée. Elle est assemblée sur l'élément intermédiaire de support 4 au moyen de vis qui se logent dans les trous de fixation 14 communs à l'élément intermédiaire de support 4 et au carter de distribution 2. La coiffe 6 est aussi fixée sur la caisse, non représentée, du véhicule automobile, par l'intermédiaire d'un élément amortissant non représenté.

Un des avantages de la présente invention est que la surface d'appui de l'élément intermédiaire de support 4 est plus importante, ce qui permet d'augmenter la fréquence propre de l'ensemble coiffe moteur 6 et élément intermédiaire de support 4.

Un autre avantage est que le nombre de vis supportant l'effort de cisaillement augmente, car il s'agit des vis du carter de distribution 2. Ceci améliore la fiabilité de l'assemblage.

Un autre avantage est que le nombre de vis total (du carter de distribution et de l'élément intermédiaire de support 4) est diminué, et qu'il y a une pièce de moins à monter.

## Revendications

1. Dispositif de support d'un moteur à combustion interne en V fixé sur la caisse d'un véhicule automobile par l'intermédiaire d'un élément amortissant, le dispositif comportant une coiffe (6) de fixation sur la caisse et un élément intermédiaire de support (4), la coiffe (6) étant assemblée sur l'élément intermédiaire de support (4) lui-même monté sur le carter cylindre et les culasses du moteur, la partie inférieure de l'élément intermédiaire de support (4) ayant une forme prévue pour épouser celle d'une pompe à eau fixée sur un orifice (10) d'un carter de distribution (2), **caractérisé en ce que** le dispositif comporte le carter de distribution (2) du moteur, l'élément intermédiaire de support (4) étant intégré au carter de distribution (2), et **en ce que** le dispositif comporte des trous de fixation (14) communs à l'élément intermédiaire de support (4) et au carter de distribution (2), les trous (14) étant situés autour de la partie intérieure du V sur la périphérie du carter de distribution (2).

2. Dispositif de support selon la revendication 1, **caractérisé en ce qu'**il comporte des nervures (8) de rigidification partant de l'élément intermédiaire de support (4) et qui s'étendent le long de la face extérieure du carter de distribution (2).

3. Dispositif de support selon la revendication 2, **caractérisé en ce que** les nervures (8) s'étendent le long du carter de distribution (2) entre l'élément intermédiaire de support (4) et la périphérie du carter de distribution (2).

4. Dispositif de support selon la revendication 2 ou 3, **caractérisé en ce que** les nervures (8) s'étendent le long du carter de distribution (2) entre l'élément intermédiaire de support (4) et des trous de fixation (12) disposés sur la périphérie du carter de distribution (2).

5. Dispositif de support selon quelconque des revendications 2 à 4, **caractérisé en ce que** les nervures (8) s'étendent le long du carter de distribution (2) à partir de trous de fixation (14) disposés sur la périphérie de l'élément intermédiaire de support (4).

## Claims

1. Bearer device for supporting an internal combustion V-engine fixed to the body of a motor vehicle via a shock-absorbing element, the device comprising a cap (6) to be fixed to the body and an intermediate bearer element (4), the cap (6) being assembled on the intermediate bearer element (4), which is itself mounted on the crank-case and the cylinder head of the engine, the lower part of the intermediate bearer element (4) having a shape designed to espouse that of a water pump fixed to an orifice (10) in a timing cover (2), **characterized in that** the device comprises the timing cover (2) of the engine, the intermediate bearer element (4) being incorporated into the timing cover (2), and **in that** the device comprises fixing holes (14) common to the intermediate bearer element (4) and to the timing cover (2), the holes (14) being situated around the lower part of the V on the periphery of the timing cover (2).

2. Bearer device according to Claim 1, **characterized in that** it comprises stiffening ribs (8) leading from the intermediate bearer element (4) and extending along the exterior face of the timing cover (2).

3. Bearer device according to Claim 2, **characterized in that** the ribs (8) extend along the timing cover (2) between the intermediate bearer element (4) and the periphery of the timing cover (2).

4. Bearer device according to Claim 2 or 3, **characterized in that** the ribs (8) extend along the timing cover (2) between the intermediate bearer element (4) and fixing holes (12) positioned on the periphery of the timing cover (2).

5. Bearer device according to any of Claims 2 to 4, **characterized in that** the ribs (8) extend along the timing cover (2) from fixing holes (14) positioned on the periphery of the intermediate bearer element (4).

## Patentansprüche

1. Trägervorrichtung für einen V-Verbrennungsmotor, die am Aufbau eines Kraftfahrzeugs mittels eines Dämpfungselements befestigt ist, wobei die Vorrichtung eine Abdeckung (6) zur Befestigung am Aufbau und ein Zwischenträgerelement (4) aufweist, wobei die Abdeckung (6) auf das Zwischenträgerelement (4) aufgesetzt ist, das selbst auf das Zylindergehäuse und die Zylinderköpfe des Motors montiert ist, wobei der untere Bereich des Zwischenträgerelements (4) eine Form hat, die vorgesehen ist, um sich derjenigen einer Wasserpumpe anzupassen, die an einer Öffnung (10) eines Steuergehäuses (2) befestigt ist, **dadurch gekennzeichnet, dass** die Vorrichtung das Steuergehäuse (2) des Motors aufweist, wobei das Zwischenträgerelement (4) in das Steuergehäuse (2) integriert ist, und dass die Vorrichtung Befestigungslöcher (14) aufweist, die dem Zwischenträgerelement (4) und dem Steuergehäuse (2) gemeinsam sind, wobei die Löcher (14) sich um den inneren Bereich des V herum auf dem Umfang des Steuergehäuses (2) befinden.

2. Trägervorrichtung nach Anspruch 1, **dadurch gekennzeichnet, dass** sie Versteifungsrippen (8) aufweist, die vom Zwischenträgerelement (4) ausgehen und sich entlang der Außenseite des Steuergehäuses (2) erstrecken.

3. Trägervorrichtung nach Anspruch 2, **dadurch gekennzeichnet, dass** die Rippen (8) sich entlang des Steuergehäuses (2) zwischen dem Zwischenträgerelement (4) und dem Umfang des Steuergehäuses (2) erstrecken.

4. Trägervorrichtung nach Anspruch 2 oder 3, **dadurch gekennzeichnet, dass** die Rippen (8) sich entlang des Steuergehäuses (2) zwischen dem Zwischenträgerelement (4) und Befestigungslöchern (12) erstrecken, die auf dem Umfang des Steuergehäuses (2) angeordnet sind.

5. Trägervorrichtung nach einem der Ansprüche 2 bis 4, **dadurch gekennzeichnet, dass** die Rippen (8) sich entlang des Steuergehäuses (2) ausgehend von Befestigungslöchern (14) erstrecken, die auf dem Umfang des Zwischenträgerelements (4) angeordnet sind.
